# EUROPÄISCHE PATENTSCHRIFT

(11) **EP 4 005 953 B1**
(45) Veröffentlichungstag und Bekanntmachung des Hinweises auf die Patenterteilung: **03.09.2025**
(21) Anmeldenummer: 21210739.5
(22) Anmeldetag: 26.11.2021
(51) Int. Cl.: B65G 47/64, B07C 5/02, B07C 5/10, B07C 5/12, B07C 5/36

(54) **SORTIERER**
SORTER
DISPOSITIF DE TRI

(30) Priorität: 27.11.2020 DE 102020131570
(43) Veröffentlichungstag der Anmeldung: 01.06.2022
(73) Patentinhaber: WIPOTEC GmbH, 67657 Kaiserslautern (DE)
(72) Erfinder: Düppre, Theo, 67663 Kaiserslautern (DE); Joachim, Matthias, 66953 Pirmasens (DE)
(74) Vertreter: Eder Schieschke & Partner mbB

(56) Entgegenhaltungen:
- EP-A2- 0 030 653
- WO-A1-2021/050252
- US-A- 4 424 966
- US-A- 4 938 336
- US-A1- 2013 153 364

## Beschreibung

Die vorliegende Erfindung betrifft einen Sortierer zum Aussortieren diskreter Produkte aus einem Produktstrom. Solche Sortierer kommen beispielsweise bei der Produktion von Lebensmitteln zum Einsatz, die diskret, das heißt als einzelne Stücke auf einem Förderband transportiert werden und von denen einige nach vorgebbaren Kriterien aus dem Produktstrom auszusortieren sind. So könnte der Produktstrom beispielsweise Fleischscheiben für Hamburger, Schnitzel oder Koteletts umfassen, eventuell auch in gefrorenem und dann biegesteifem Zustand. Denkbar sind aber auch andere Lebensmittel, Tablettenblister oder sonstige, insbesondere flache Produkte, die vereinzelt gefördert werden.

Das Aussortieren einzelner Produkte (dann auch als "Schlechtprodukte" bezeichnet) aus dem Förderstrom ist dann vergleichsweise einfach, wenn alle Produkte auf dem Förderband in einer einzigen Spur in Förderrichtung hintereinander liegen, deren Position quer zur Förderrichtung und deren Spurbreite von vornherein festgelegt und für alle Produkte identisch ist. Mit einem quer zur Förderrichtung wirkenden Schieber ("Pusher"), einem Ausblaser oder einer Weiche können dann identifizierte Schlechtprodukte seitlich vom Förderband heruntergeschoben werden. Nicht auszusortierende Produkte (im Weiteren auch als "Gutprodukte" bezeichnet) werden nicht beaufschlagt und stattdessen in Förderrichtung weitergefördert.

Mit zunehmender Fördergeschwindigkeit muss jedoch ein Pusher oder eine Weiche sehr schnell quer zur Förderrichtung hin- und zurückbewegt werden, um das auszusortierende Produkt im richtigen Moment zu beaufschlagen. Dabei wirken zwangsläufig hohe Massekräfte auf den Pusher oder die Weiche und hohe Beschleunigungskräfte auf das Produkt ein, die zu seiner Beschädigung oder Zerstörung führen können.

Oft liegen die Produkte (Gutprodukte und Schlechtprodukte) allerdings in chaotischer Anordnung mit voneinander abweichenden Abmessungen vor- und nebeneinander auf dem Förderband, so dass sie zu benachbarten weiteren Produkten unterschiedliche Abstände aufweisen oder einander sogar berühren. Ein Pusher oder eine Weiche ist dann zum Aussortieren ungeeignet.

Alternativ ist es bekannt, durch Rückzugsbänder oder Klappbänder für ausgewählte Produkte temporär eine Lücke im Förderweg zwischen zwei Förderbänder zu erzeugen, so dass die die Lücke erreichenden Produkte durch diese hindurch und damit aus dem Produktstrom herausfallen. Der konstruktive Aufwand für das Hin- und Herfahren der Bänder in die Lücke oder aus ihr heraus ist jedoch erheblich, denn solche Rückzugsbänder bestehen aus mindestens drei hintereinander angeordneten Transportbändern, deren mittleres Band zum Beispiel unter das erste oder das dritte Band zurückziehbar ist, um die Lücke zu öffnen, durch die das auszusortierende Produkt hindurchfallen kann. Die Zeitspanne für das aktive Aussortieren und das Zurückfahren des Klappbands in die Ausgangsstellung ist relativ lang und bedingt daher einen Mindestabstand in Förderrichtung zwischen einem Schlechtprodukt und einem stattdessen weiterzufördernden Gutprodukt. Bei hohen Fördergeschwindigkeiten von bis zu 50m/min und entsprechend schnell zu bewegenden Rückzugsbändern sind die dabei entstehenden Beschleunigungskräfte zu groß. Weiterhin ist es schwierig, Produkte mit voneinander abweichenden Abmessungen auszusortieren, da die Arbeits- und Ruheposition eines Pushers oder einer Weiche von diesen Abmessungen abhängen kann.

Aus der WO 2021/050252 A1 (die als Druckschrift gemäß Artikel 54 (3) EPÜ beim EPA betrachtet ist) ist ein Förderer mit Erkennungsmitteln bekannt, anhand derer die Position von auszusortierenden Produkten auf einem Förderband erfasst wird. Das Aussortieren erfolgt mithilfe von Sortierfingern, welche zum Aussortieren aus der Fördererebene nach oben so herausragen, dass dabei dem herannahenden Produkt die Unterseite des Sortierfingers zugewandt ist.

Die US 4 938 336 A beschreibt einen Sortiermechanismus für Kekse, die entlang vorgegebener Spuren transportiert und wahlweise aus ihrer Spur heraus bewegt werden, indem einer oder mehrere in der Spur liegende Sortierfinger zur Ausbildung einer Sortierlücke angesteuert werden.

Die US 2013/153364 A1 zeigt einen mehrspurigen Transportmechanismus für Lebensmittelportionen, wobei in jeder Spur ein Klappmechanismus vorgesehen ist, um einzelne Portionen nach Prüfung auf bestimmte Kriterien durch Betätigung des Klappmechanismus aus dem Produktstrom ausschleusen zu können. Insbesondere offenbart US 2013/153364 A1 einen Sortierer nach dem Oberbegriff des Anspruchs 1.

Aufgabe der Erfindung war es daher, ein Verfahren und eine Vorrichtung mit kurzer Baulänge zur Überwindung der vorgenannten Nachteile anzubieten, um Produkte auf einem Förderband in chaotischer Anordnung und mit voneinander abweichenden Abmessungen auch bei hohen Fördergeschwindigkeiten gezielt aussortieren zu können. Die Vorrichtung soll modular erweiterbar sein und in Förderrichtung eine möglichst kurze Bauform aufweisen, bevorzugt sogar kürzer als die Produkte selber. Die Aufgabe wird gelöst durch einen Sortierer nach Anspruch 1 und einem Verfahren nach Anspruch 8. Weitere vorteilhafte Ausführungsformen ergeben sich aus den Unteransprüchen.

Der Erfindung liegt die Erkenntnis zugrunde, dass jedes auf einem Förderband in einer gemeinsamen Förderrichtung X geförderte Produkt bei chaotischer Anordnung eine ihm eigene Spur definiert, entlang welcher es gefördert wird. Die Lage der Spur in Querrichtung Y (orthogonal zur Förderrichtung X) und die Breite der Spur wird dabei bestimmt durch die Position des Produktes auf dem Förderband in Querrichtung und seine ebenfalls in Querrichtung gemessene maximale Breite. Die Spuren mehrerer Produkte können somit an vielen unterschiedlichen Querpositionen liegen, unterschiedliche Breiten aufweisen und insbesondere einander überlagern. Aus dieser Erkenntnis resultierte die Überlegung, das Aussortieren (im Weiteren gelegentlich auch als "Ausschleusen" bezeichnet) eines Schlechtproduktes unter besonderer Berücksichtigung seiner jeweiligen Spur vorzunehmen. (Im Weiteren beziehen sich die Ausdrücke "Breite" oder "Querbreite" immer auf die Abmessungen in Querrichtung Y, sofern nichts anderes dazu ausgeführt ist.)

Erfindungsgemäß geschieht dies mithilfe einer Sortieranordnung, umfassend eine Vielzahl von in Querrichtung (vorzugsweise fluchtend) nebeneinander liegenden, gleichartigen schmalen Sortierfingern, die das Produkt auf dem regulären Förderweg stützen bzw. fördern können, zugleich aber auch zur Ausbildung einer genau auf das auszusortierende Produkt zugeschnittenen ("passenden") Sortierlücke ausgebildet sind (die Bezeichnung "Finger" soll hier allgemein einen von einer Schwenkachse frei auskragenden länglichen Abschnitt beschreiben). "Passend" soll hier bedeuten, dass die Lücke ausreichend groß, aber nicht unnötig größer ist, um ein Produkt hindurch auszuschleusen. Die Sortierfinger sind dazu um eine in Querrichtung Y verlaufende gemeinsame Schwenkachse zwischen einer Sortierstellung und einer Förderstellung schwenkbar. Die einzelnen Sortierfinger sind benachbart nebeneinander entlang der Schwenkachse angeordnet, vorzugsweise über die gesamte Breite des Zuführbandes. Vorzugsweise sind die Sortierfinger baugleich ausgeführt, um die Konstruktion des Sortierers und die Ersatzteilbevorratung zu vereinfachen. Die Anordnung der Sortierfinger lässt sich leicht in modularer Bauweise verändern, in dem einzelne Sortierfinger der Sortieranordnung hinzugefügt oder aus ihr entfernt werden. Bei fluchtend auf einer gemeinsamen Achse sitzenden Sortierfingern können einzelne Sortierfinger beispielsweise einfach zusätzlich auf die Achse geschoben oder von dieser heruntergezogen werden.

Die Sortierlücke wird erzeugt durch Verschwenken einer Gruppe von Sortierfingern, die teilweise oder vollständig in der zum Schlechtprodukt gehörenden Produktspur liegen. Bevorzugt erfolgt dies rechtzeitig vor oder genau in dem Moment, in dem das Schlechtprodukt die Sortieranordnung erreicht. Das auszusortierende Produkt kann dann durch die entstandene Sortierlücke nach unten aus dem Produktstrom herausfallen. In Querrichtung Y benachbarte Gutprodukte liegen dabei seitlich neben der Sortierlücke und können auf den dort in Förderstellung verbliebenen Sortierfingern weiter in Förderrichtung X gestützt bzw. gefördert werden. In Förderrichtung vor und hinter dem auszusortierenden Schlechtprodukt angeordnete Gutprodukte können ebenfalls weitergefördert werden, wenn das Zeitfenster für die Öffnung der Sortierlücke mit dem Eintreffen des Schlechtproduktes an der Sortierlücke möglichst genau synchronisiert wird.

Der Begriff "Gutprodukt" und "Schlechtprodukt" soll hierbei lediglich klarstellen, dass es sich um Produkte handelt, die sich hinsichtlich wenigstens eines Kriteriums (bspw. Abmessung, Füllgewicht, Verunreinigung, optische Erscheinung etc.) so unterscheiden, dass der weitere Transportweg eines Gutprodukts von dem eines Schlechtproduktes abweichen soll. "Schlechtprodukt" bedeutet daher lediglich, dass die Weiterförderung eines solchen Produkts in Förderrichtung X nicht gewünscht und das Produkt daher aus dem Produktstrom auszusortieren ist. Gleichwohl können "Schlechtprodukte" erwünschte Produktmerkmale aufweisen und für die weitere Verarbeitung bzw. den Verkauf vorgesehen sein, während "Gutprodukte" mängelbehaftet sind und nach ihrer Weiterförderung in Förderrichtung X nicht weiterverarbeitet bzw. verworfen werden. "Gutprodukt" und "Schlechtprodukt" im Sinne dieser Anmeldung zeigt also lediglich an, dass diese Produkte mithilfe des Sortierers auf unterschiedliche weiterführende Wege gelenkt werden.

Mithilfe der Sortieranordnung ergibt sich der erfindungsgemäße Vorteil, aus einem Produktstrom von chaotisch auf einem Förderband angeordneten Produkten, gegebenenfalls sogar mit uneinheitlichen Geometrien, die Schlechtprodukte schnell und mit geringem konstruktivem Aufwand ausschleusen zu können, unabhängig von ihrer Querposition und ihrer Breite. Aus dem Stand der Technik bekannte Sortierer sind häufig angepasst auf Produkte mit bestimmten geometrischen Abmessungen, bspw. eine quadratische oder rechteckige Grundform, ein maximaler oder innerhalb von Toleranzen einzuhaltender Durchmesser, eine konstante Kantenlänge, eine bestimmte Produkthöhe etc. Der erfindungsgemäße Sortierer ermöglicht es, die Produkte unabhängig von ihren geometrischen Abmessungen bzw. von bestimmten Formaten - also "formatfrei" - zu transportieren bzw. zu sortieren, da für jedes Schlechtprodukt auf Basis seiner individuellen Abmessungen die zugehörige individuelle Spur ermittelt wird. Auch die Anordnung der Produkte (Gutprodukte und Schlechtprodukte) in der Zufuhr zum Sortierer kann wahllos bzw. chaotisch erfolgen, da für jedes Produkt individuell seine Abmessungen und seine Spur ermittelt wird.

Ein erfindungsgemäßer Sortierer umfasst dazu ein Zuführband, auf dem diskrete Produkte (Gutprodukte und Schlechtprodukte) in einer Förderrichtung X gefördert werden. Jedes Produkt definiert eine ihm individuell zugeordnete Spur, auf der es in Förderrichtung gefördert wird. Die Position der Spur in Bezug auf die zur Förderrichtung X orthogonal verlaufende Querrichtung Y wird vorgegeben durch die entsprechende Querposition des zugehörigen Produktes, ebenso wie die Spurbreite definiert ist durch die Breite des betrachteten Produktes, beispielsweise eines auszusortierenden Schlechtproduktes. Die Oberseite des Zuführbands definiert mit der Förderrichtung X der Querrichtung Y eine Förderebene E. Eine Höhenrichtung Z verläuft orthogonal zur Förderrichtung X und zur Querrichtung Y.

Zum Sortierer gehört weiterhin eine Sortieranordnung von wenigstens drei, vorzugsweise einer Vielzahl von schmalen Sortierfingern, die in Querrichtung nebeneinander liegen und jeweils aus einer Sortierstellung in eine Förderstellung und zurück bewegbar sind. Jeder Sortierfinger ist dabei dazu ausgebildet, in der Sortierstellung eine ihm zugeordnete Teillücke in der Förderebene freizugeben. Dadurch kann ein der Sortieranordnung zugeführtes, auszusortierendes Schlechtprodukt durch eine von mehreren benachbarten Teillücken gemeinsam gebildete, vorzugsweise nach unten offene Sortierlücke aussortiert werden. Ferner ist jeder Sortierfinger dazu ausgebildet, in der Förderstellung die ihm zugehörige Teillücke zu verschließen, um ein am jeweiligen Sortierfinger eintreffendes Gutprodukt von unten unterstützen und in Förderrichtung weiterfördern zu können.

Zum Aussortieren eines bestimmten Schlechtproduktes ist die Gruppe der in der Spur des Schlechtproduktes liegenden Sortierfinger während einer Sortierzeitspanne erfindungsgemäß in die Sortierstellung bewegbar und dort haltbar, um dadurch eine zum Schlechtprodukt passende Sortierlücke in dessen individueller Spur auszubilden. Angrenzende weitere Sortierfinger können in der Förderstellung bleiben, um die Sortierlücke nicht größer als nötig auszubilden oder um benachbarte Gutprodukte von unten zu stützen und weiterzufördern. Um die Sortierlücke individuell an das jeweils auszusortierende Schlechtprodukt anpassen zu können sind wenigstens drei, vorzugsweise alle Sortierfinger der Sortieranordnung jeweils unabhängig voneinander von der Sortierstellung in die Förderstellung und zurück bewegbar. Dadurch wird es außerdem möglich, eine oder mehrere Sortierlücken gleichzeitig auszubilden oder zu öffnen bzw. zu schließen, während eine oder mehrere andere Sortierlücken bereits oder noch geöffnet sind.

In der Förderstellung liegen die einzelnen Sortierfinger mit einem jeweiligen obersten Förderabschnitt vorzugsweise in der Förderebene. Zweckmäßigerweise kann dieser Förderabschnitt einen antreibbaren Transportriemen aufweisen, um die Produkte bei der Weiterförderung in Förderrichtung X zu stützen und/oder auf eine stromabwärts an die Sortierfinger anschließende Förderfläche zu fördern. Der Transportriemen kann dabei die gleiche Geschwindigkeit wie das Zuführband haben, so dass vom Zuführband kommende Gutprodukte ruckfrei ohne Verzögerung über die Oberseite der Sortierfinger weitergefördert werden können. Zweckmäßigerweise entspricht diese Geschwindigkeit auch derjenigen, mit der die Gutprodukte stromabwärts der Sortieranordnung in der Förderebene mit dort möglicherweise vorgesehenen Fördermitteln (z.B. Abführband) weiterbewegt werden. Anstelle eines oder auch mehrerer Transportriemen (beispielsweise Flach- oder Rundriemen) kommen auch andere, in gleicher Weise geeignete Elemente infrage, etwa eine Kette oder ein Gurt.

Bevorzugt wird der umlaufende Transportriemen auf seiner (der Sortierlücke zugewandten) Unterseite in einer Vertiefung des Sortierfingers versenkt zurückgeführt. Eine durch diese Unterseite gebildete Sortierflanke (siehe unten) kann dann ein Schlechtprodukt in bzw. durch die Sortierlücke lenken, ohne dass der Transportriemen (der in diesem Abschnitt entgegen der Bewegung des Schlechtproduktes geführt wird) dieses Schlechtprodukt dabei berührt oder bremst.

Es sind unterschiedliche Varianten denkbar, um durch Bewegen der Sortierfinger eine Sortierlücke zu erzeugen. In einer nicht beanspruchten Ausführungsform schwenken oder klappen die Sortierfinger mit ihrem in Förderrichtung gesehen hinteren, dem herannahenden Produkt zugewandten Abschnitt bzw. Ende aus der Förderstellung nach oben aus der Sortierebene heraus in den Förderweg des jeweiligen Schlechtproduktes (Sortierstellung). Die Schwenkachse für diese Bewegung liegt dabei im Bereich des in Förderrichtung gesehen vorderen, dem herannahenden Produkt abgewandten Endes jedes Sortierfingers. Durch das Nach-oben-Klappen des Sortierfinger-Abschnitts ist dessen Unterseite zum herannahenden Schlechtprodukt gerichtet. Diese Unterseite kann als Sortierflanke dazu dienen, das Schlechtprodukt nach unten durch die Sortierlücke zu lenken, sofern das Schlechtprodukt nicht bereits allein aufgrund der Schwerkraft durch die Lücke fällt.

Dieser Lenkeffekt kann noch verstärkt werden durch einen an der Sortierflanke angeordneten und angetriebenen Sortierriemen, dessen dem Schlechtprodukt zugewandter Abschnitt sich in Richtung auf die Sortierlücke bewegt, vorzugsweise mit der Fördergeschwindigkeit des Zuführbands. Beim Kontakt des Schlechtprodukts mit dem Sortierriemen wird das Schlechtprodukt zusätzlich zur Lenkwirkung des hochgeklappten Sortierfingerabschnitts noch aktiv in bzw. durch die Sortierlücke gedrängt. In der Förderstellung darf der Sortierriemen dabei nicht bis in die Förderebene ragen, da er sich auf der Oberseite des Sortierfingers dann entgegen der Förderrichtung des Zuführbandes bewegen würde. Stattdessen könnte der Sortierriemen dort in einer Vertiefung entgegen der Förderrichtung geführt werden. Alternativ wäre es denkbar, die Bewegungsrichtung des Sortierriemens jeweils beim Verschwenken des Sortierfingers (vorzugsweise automatisch) umzukehren. Dann könnte der Sortierriemen in der Förderstellung zugleich als Transportriemen bis in die Förderebene ragen (und in dieser Stellung entsprechend in Förderrichtung angetrieben werden) um ein Gutprodukt in Förderrichtung X weiterzufördern. In der Sortierstellung dagegen könnte der Sortierriemen in umgekehrter Richtung angetrieben werden, um das Schlechtprodukt in der vorgenannten Weise durch die Sortierlücke zu drängen. Der in dieser Variante sowohl als Transportriemen wie auch als Sortierriemen dienende Riemen muss dann nicht teilweise in Vertiefungen versenkt zurückgeführt werden.

Der Verschwenkwinkel der Sortierfinger zwischen Förderstellung und Sortierstellung beträgt zweckmäßigerweise weniger als 90°, vorzugsweise ca. 60°, wobei der Schwenkwinkel höchst vorzugsweise einstellbar ist.

Die vorgenannte Ausführungsform, bei der sich die Sortierfinger sozusagen zum herannahenden Produkt hin aus der Förderebene aufrichten, hat den Vorteil, dass der Sortierfinger in einer Doppelfunktion einerseits die Lücke freigibt und andererseits das Schlechtprodukt mit einer Sortierflanke an der Unterseite des nach oben geklappten Sortierfingers aktiv in die Sortierlücke herablenken kann. Dem steht der Nachteil gegenüber, dass sich das dem herannahenden Schlechtprodukt zugewandte Ende des Sortierfingers dazu bewegt. Der gesamte Sortierfinger muss daher beim Eintreffen des Schlechtproduktes die Sortierstellung weitgehend eingenommen haben, damit die Sortierlücke zu diesem Zeitpunkt bereits ausreichend groß ist. Folgt auf das Schlechtprodukt unmittelbar angrenzend ein Gutprodukt, so muss der Sortierfinger unmittelbar nach dem Aussortieren wieder in die Förderebene herausgeklappt sein, um das Gutprodukt in der Förderebene übernehmen zu können.

Die Erfindung sieht vor, dass jeder Sortierfinger zwischen sich und einer stromabwärts angrenzenden Förderfläche die Teillücke freigibt, indem er aus der Förderstellung zur Einnahme der Sortierstellung nach unten wegklappt. In dieser Variante ragt der Sortierfinger in der Sortierstellung nicht in den Förderweg des Schlechtproduktes, er klappt stattdessen aus der Sortierebene nach unten weg, wobei die Schwenkachse im Bereich des in Förderrichtung gesehen rückwärtigen Endes jedes Sortierfingers liegt. Die Lücke öffnet sich dann sozusagen "in Förderrichtung voraus" nach unten.

Diese Ausführungsform hat den Vorteil, dass einzelne Sortierfinger noch verschwenkt werden können, nachdem ein Produkt sie bereits erreicht hat bzw. auf ihnen aufliegt. Liegt beispielsweise ein Gutprodukt auf einer seiner Spur zugehörigen Auswahl von Sortierfingern in der Förderstellung auf, dem ein auszusortierendes Schlechtprodukt in der gleichen Spur unmittelbar nachfolgt, so können die Sortierfinger zunächst in der Förderstellung bleiben, bis das Gutprodukt ausreichend weit (beispielsweise mit mindestens der halben Länge oder seinem Schwerpunkt) auf die an die Sortierfinger anschließende Förderfläche übergeben wurde. Sofort danach können die Sortierfinger mit dem darauf bereits aufliegenden Schlechtprodukt in die Sortierstellung herabgeklappt werden, um das Schlechtprodukt auszusortieren. Ein auf dieses Schlechtprodukt beispielsweise unmittelbar nachfolgendes Gutprodukt in der gleichen Spur kann zunächst auf die in die Sortierstellung herabgeklappten Sortierfinger gefördert werden. Nach Abgabe des Schlechtproduktes, und noch während das Gutprodukt auf ihnen aufliegt, lassen sich die Sortierfinger wieder in die Förderstellung heraufklappen, so dass das Gutprodukt regulär weitergefördert werden kann.

Besonders vorteilhaft lassen sich mit dieser Ausführungsform auch Produkte verarbeiten, deren Spuren sich teilweise überlagern. Jedes Gutprodukt wird ohne es auszusortieren weitergefördert, solange sein Schwerpunkt in Querrichtung gesehen zwischen zwei in der Förderstellung befindlichen Sortierfingern liegt. Es ist somit nicht erforderlich, ein Gutprodukt über seine ganze Spurbreite durch Sortierfinger zu stützen. Stattdessen können weiter außen liegende Sortierfinger in der Spur des Gutproduktes, die gleichzeitig auch in der Spur eines nachfolgenden oder vorausgehenden Schlechtproduktes liegen, die Sortierstellung einnehmen, während das Gutprodukt weitergefördert wird. Dadurch können Schlechtprodukte auch von eng benachbarten und seitlich versetzt dazu angeordneten Gutprodukten sicher getrennt werden.

Ein weiterer Vorteil dieser Ausführungsform liegt darin, dass ein angetriebener Transportriemen am Sortierfinger, der die Weiterförderung von Gutprodukten in der Förderstellung unterstützt, in gleicher Weise auch genutzt werden kann, um ein Schlechtprodukt auf den herabgeklappten Sortierfingern zur Sortierlücke zu fördern und auszusortieren. Das zuvor beschriebene Problem eines gegen die Ausschleuserichtung laufenden Transportriemens besteht bei den aus der Förderebene herunterklappenden Sortierfingern nicht.

Da in dieser Ausführungsform die Sortierfinger aus der Sortierebene herunter und damit nicht in den Förderweg der Produkte heraufgeklappt werden, können die Sortierfinger die zuvor beschriebene Doppelfunktion (Sortierlücke öffnen und Schlechtprodukt herabdrängen) hier nicht erfüllen. Zur Ergänzung dieser Funktion sieht eine vorteilhafte Ausführungsform der Erfindung eine oberhalb der Sortieranordnung oder der Förderebene positionierte Lenkanordnung vor. Diese Lenkanordnung erstreckt sich in Querrichtung über das Zuführband oder die Sortieranordnung und beinhaltet wenigstens drei, vorzugsweise eine Vielzahl von Lenkfingern, die in Querrichtung Y nebeneinander liegen und jeweils aus einer Lenkstellung in eine Freigabestellung und zurück bewegbar (vorzugsweise verschwenkbar) sind.

In der Freigabestellung liegen die Lenkfinger außerhalb des Förderweges der Produkte, so dass diese als Gutprodukte ungehindert in Förderrichtung X weitergefördert werden können. Aus der Freigabestellung lässt sich jeder Lenkfinger (genauer: ein Abschnitt jedes Lenkfingers) in den Förderweg eines Schlechtproduktes hereinklappen (Lenkstellung), so dass die Weiterförderung in Förderrichtung X bei Kontakt zwischen Schlechtprodukt und Lenkfinger unterbunden wird. Erreicht das Schlechtprodukt eine dem Produkt in der Lenkstellung zugewandte Lenkflanke des Lenkfingers, so wird es mit einer senkrecht zur Förderebene nach unten wirkenden Kraft beaufschlagt (diese senkrecht wirkende Kraft kann eine Komponente einer schräg zur Förderebene auf das Produkt einwirkenden Kraft sein). Die Form oder Ausrichtung des Lenkfingers bzw. seiner Lenkflanke in der Lenkstellung ist so gewählt, dass aus der vom Zuführband auf das Schlechtprodukt erzeugten, in Förderrichtung X gerichteten Vorschubkraft eine dazu orthogonal in Richtung auf die Förderebene wirkende Umlenkkraft auf das Schlechtprodukt erzeugt wird. Durch eine gleichzeitig unterhalb der Lenkanordnung in der Förderebene geöffnete, mit mehreren Sortierfingern ausgebildete Sortierlücke kann das Schlechtprodukt dann aussortiert werden.

Die Lenkfinger haben sich als besonders effektiv herausgestellt bei hohen Fördergeschwindigkeiten. Dann nämlich ist die Geschwindigkeitskomponente des Schlechtproduktes in Förderrichtung X während der Fallbewegung in bzw. durch die Sortierlücke zu groß, als dass das Schlechtprodukt vor Ende der Lücke ausreichend tief fallen könnte. Die Lenkfinger jedoch lenken das Schlechtprodukt aktiv und zusätzlich zur Gravitationskraft nach unten ab, wodurch die Abwärtsbewegung durch die Sortierlücke beschleunigt wird. Weiterhin bildet der Lenkfinger einen Anschlag für das nach oben strebende hintere Ende des abrupt abgestoppten Schlechtprodukts, wobei das Schlechtprodukt sehr schnell in eine fast senkrechte Lage überführt wird und sehr rasch nach unten in die Sortierlücke abtaucht.

Ähnlich wie die Sortierfinger sind auch die Lenkfinger (zweckmäßigerweise unabhängig voneinander) aus der Lenkstellung in die Freigabestellung und zurück bewegbar bzw. verschwenkbar. Entsprechend können aus der Vielzahl der Lenkfinger gezielt solche ausgewählt werden, die in der Spur eines auszusortierenden Schlechtproduktes liegen und dieses von oben beaufschlagen sollen, während andere Lenkfinger in der Freigabestellung bleiben. Dabei ist es nicht erforderlich, alle in der Spur eines Schlechtproduktes angeordneten Lenkfinger in die Lenkstellung zu verschwenken. Je nach Produkt und Fördergeschwindigkeit kann es bereits genügen, weniger oder sogar nur einen Lenkfingern zu diesem Zweck zu betätigen. Daraus ergibt sich der Vorteil, dass solche Lenkfinger, die in der Spur eines Schlechtproduktes und zugleich in der Spur eines unmittelbar vorausgehenden oder nachfolgenden Gutproduktes liegen, ihre Freigabestellung beibehalten können (aber nicht müssen), solange wenigstens ein Lenkfinger in der Spur des Schlechtproduktes die Lenkstellung einnehmen kann. Tatsächlich kann es vorteilhaft genügen, ein Schlechtprodukt in Bezug auf dessen Spurbreite etwa mittig oder im Bereich seines Schwerpunktes mit einem oder mehreren Lenkfingern umzulenken, während die anderen Lenkfinger innerhalb der Spur des Schlechtproduktes die Freigabestellung beibehalten. Auch um zum Beispiel Druckluft zu sparen oder Betriebsgeräusche zu reduzieren, könnten nur die beiden in einer Spur liegenden innersten oder äußersten Lenkfinger bewegt werden.

Allerdings ist es auch möglich, alle Lenkfinger entlang der gesamten Breite der Spur des Schlechtproduktes bzw. der Sortierlücke in die Lenkstellung zu verschwenken, um das auszusortierende Produkt über dessen gesamte Breite mit einer abwärts gerichteten Kraft zu beaufschlagen. Es ist sogar denkbar, in Querrichtung an die Sortierlücke angrenzende Lenkfinger in die Lenkstellung zu verschwenken (solange die Lenkfinger in dieser Stellung die Förderebene nicht durchragen bzw. mit den nicht verschwenkten Sortierfingern jenseits der Sortierlücke nicht kollidieren).

Ähnlich wie die Sortierfinger können auch die Lenkfinger im Bereich ihrer Lenkflanke einen angetriebenen Lenkriemen aufweisen, der die Abwärtsbewegung eines durch eine Sortierlücke fallenden Produktes unterstützt oder beschleunigt. Der Verschwenkwinkel der Lenkfinger zwischen Lenkstellung und Freigabestellung beträgt zweckmäßigerweise weniger als 90°, vorzugsweise ca. 60°, wobei der Schwenkwinkel höchst vorzugsweise einstellbar ist. Zweckmäßigerweise ist die Schwenkachse der Sortierfinger ebenso in Querrichtung Y ausgerichtet wie die Schwenkachse der Lenkfinger, so dass beide Achsen zueinander parallel verlaufen. Außerdem können Sortierfinger und Lenkfinger mit jeweils gleicher Breite gewählt werden und/oder in Querrichtung Y jeweils an gleichen Positionen angeordnet sein, so dass sie einander in Höhenrichtung Z paarweise gegenüberliegen. Das kann den Aufbau und die Ansteuerung der Vorrichtung vereinfachen.

Sofern die Sortierfinger und/oder die Lenkfinger mit angetriebenen Riemen versehen sind, ist es mitunter konstruktiv schwierig, die Schwenkachse gleichzeitig als Antriebsachse für die Riemen auszubilden. Bevorzugt sind die Sortierfinger und Lenkfinger daher bezüglich ihrer Schwenkachse und Antriebsachse ausgebildet nach dem Vorbild der Patentanmeldung DE 10 2019 127 189, deren Offenbarung hier mit eingeschlossen sein soll, und nach deren Lehre die Schwenkachse und die Antriebsachse einer Sortiervorrichtung zueinander beabstandet sind.

Nach einer vorteilhaften Ausführungsform der Erfindung können die einzelnen Sortierfinger und die einzelnen Lenkfinger jeweils die gleiche Breite haben, und/oder einander jeweils als Paar in Höhenrichtung gegenüberliegen und/oder in Querrichtung jeweils nahe aneinander liegen, vorzugsweise über die gesamte Y-Breite des Zuführbands (K). Die Anzahl und Querbreite der Sortierfinger bzw. Lenkfinger richtet sich nach der Anzahl möglicher, von den Produkten auf dem Zuführband definierten Spuren. Je größer die Anzahl der Sortierfinger und je geringer gleichzeitig die Querbreite jedes einzelnen Sortierfingers ist, umso genauer kann der Sortiervorgang auf die einzelnen Produktspuren abgestimmt werden, da die Querbreite einer Sortierlücke mit zunehmender Anzahl der Sortierfinger immer besser an die tatsächliche Spurbreite des zugehörigen Schlechtproduktes angenähert werden kann. Grundsätzlich gilt diese Überlegung auch für die Lenkfinger, wobei - wie bereits erwähnt - nicht alle Lenkfinger einer Spur zum Umlenken betätigt werden müssen, so dass deren Gesamtzahl im Vergleich zur Anzahl der Sortierfinger auch geringer gewählt werden könnte. Bevorzugt erstreckt sich die Lenkanordnung mit ihren in Querrichtung Y nebeneinanderliegenden Lenkfingern über die gesamte Breite des Zuführbandes. Eine größere Breite der einzelnen Lenkfinger ermöglicht dann deren insgesamt geringere Anzahl im Vergleich zu den Sortierfingern.

Vorzugsweise ist die Anzahl der Sortierfinger größer als 5, höchst vorzugsweise größer als 15. Die Sortierfinger sind schmal, um sie in ausreichend großer Zahl und entsprechend feiner Rasterung nebeneinander anordnen zu können ("schmal" ist hier in Bezug auf die Ausdehnung der Sortierfinger in Förderrichtung X zu verstehen, die bevorzugt mindestens 5-10 mal so groß ist wie die Breite des Sortierfingers). Eine bevorzugte Breite eines einzelnen Sortierfingers liegt dabei im Bereich zwischen 2mm und 30mm, höchst vorzugsweise zwischen 10mm und 20mm. Mit diesen Maßen lassen sich Sortierlücken an ausreichend vielen verschiedenen Querpositionen und in ausreichend vielen verschiedenen Breiten ausbilden.

Um ein Schlechtprodukt mithilfe des erfindungsgemäßen Sortierers aus dem Produktstrom aussortieren zu können, muss dessen Spur bekannt sein, um diejenigen Sortierfinger betätigen zu können, die in der Spur liegen und deren zugehörige Teillücken gemeinsam eine ausreichend breite Sortierlücke bilden, um das an der Sortierlücke eintreffende Produkt dort auszusortieren. Nach der Erfindung können die die Spur beschreibenden Angaben dem erfindungsgemäßen Sortierer von einer externen Steuereinheit zugeführt werden, der die entsprechenden Daten vorliegen. Alternativ sieht die Erfindung jedoch eigene Detektionsmittel vor, mit denen die Spur eines Schlechtproduktes, auf dem Zuführband detektierbar ist (streng genommen muss die Spur nicht auf dem Zuführband detektiert werden). Es genügt gemäß einer Alternative der Erfindung, wenn die Spur nach der Erfindung bereits stromaufwärts des Zuführbandes erfasst wird und sich nachfolgend nicht verändert. Erfindungsgemäß lässt sich eine durch
a) ihre Querposition beschrieben, beispielsweise durch die Lage der Spurmitte in Bezug auf die Querrichtung Y, und
b) ihre Spurbreite, die von der Breite des jeweiligen Produktes bestimmt wird.

Die Detektionsmittel können dazu ausgebildet sein, die Spur eines als Schlechtprodukt identifizierten Produktes zu erfassen mithilfe eines Detektors, insbesondere einer Kamera mit geeigneter Bildverarbeitungssoftware, welche die Daten der Kamera auswertet und so die Querposition und Breite des Produktes in Querrichtung Y bestimmt. Denkbar ist es ferner, mithilfe der Bildauswertung auch zur ermitteln, ob ein Produkt ein Schlechtprodukt oder ein Gutprodukt ist. Als Kriterien können hierbei zum Beispiel die Produktabmessungen, eine bestimmte Produktfärbung, eine am Produkt angeordnete Kennzeichnung, der Abstand zu benachbarten Produkten oder andere optisch detektierbare Merkmale herangezogen werden.

Die Detektionsmittel können neben den Spuren der Schlechtprodukte auch die Spuren der Gutprodukte bestimmen. Das kann zweckmäßig sein, wenn die Ansteuerung der Sortierfinger oder Lenkfinger Kenntnis darüber voraussetzt, wie nahe ein Gutprodukt bei einem Schlechtprodukt liegt.

Um die Sortierfinger zum richtigen Zeitpunkt zu betätigen ist es außerdem erforderlich, das Eintreffen des Schlechtproduktes an den Sortierfingern zu bestimmen. Dies kann beispielsweise berechnet werden in Kenntnis einer momentanen Längsposition X_{P} des Produktes stromaufwärts der Sortierfinger und der Fördergeschwindigkeit des Zuführbandes. Die kameragestützten Detektionsmittel zur Bestimmung der Spur können zur Erfassung der momentanen Längsposition X_{P} ausgebildet sein. Alternativ können beispielsweise auch Sensoren, insbesondere Lichtschranken oder Näherungssensoren, verwendet werden, die bevorzugt unmittelbar stromaufwärts der Sortierfinger oder der Lenkfinger angeordnet sind. Die von den Detektionsmitteln gebildeten Daten können einer Steuereinheit des Sortierers zugeführt werden. Die Steuereinheit ist vorzugsweise auch zum Datenaustausch mit anderen Datenverarbeitungseinrichtungen und übergeordneten Steuerungen, zur Abspeicherung von Daten in einem Speicher, zum Auslesen von in einem Speicher hinterlegten Produkt- oder Prozessdaten, zur Ansteuerung einzelner Komponenten des Sortierers und zur Erstellung von Daten ausgebildet.

Das erfindungsgemäße Verfahren zum Sortieren von Produkten aus einem Förderstrom unter Nutzung eines zuvor beschriebenen Sortierers umfasst wenigstens die folgenden Schritte:
1. Ermitteln der Spur eines auf dem Zuführband geförderten Schlechtproduktes;
2. Ermitteln der Gruppe der in der Spur liegenden Sortierfinger;
3. Bewegen der Sortierfinger der Gruppe aus der Förderstellung in die Sortierstellung, um eine Sortierlücke auszubilden und das Schlechtprodukt durch die Sortierlücke hindurch auszusortieren.

Das Ermitteln der Spur und das Ermitteln der Gruppe der in der Spur liegenden Sortierfinger gemäß vorgenanntem Verfahrensablauf kann für alle Produkte auf dem Zuführband, insbesondere alle Schlechtprodukte, wiederholt oder permanent erfolgen, vorzugsweise bis sie die Sortierfinger der Sortieranordnung oder die Lenkfinger der Lenkanordnung erreichen. Dies kann zur Überprüfung oder Korrektur vorheriger Berechnungsergebnisse dienen und die korrekte Auswahl und zeitliche Betätigung der Finger sicherstellen.

Umfasst der Sortierer auch Lenkfinger, so kann das erfindungsgemäße Verfahren auch die Auswahl und Ansteuerung einer Gruppe von Lenkfingern enthalten, die in Bezug auf die Querrichtung Y beispielsweise innerhalb der Spur eines Schlechtproduktes liegen.

Die zum Aussortieren eines bestimmten Schlechtproduktes infrage kommenden Sortierfinger und Lenkfinger können zeitlich unabhängig voneinander, und insbesondere in unterschiedlicher zeitlicher Abfolge angesteuert werden. So können die Sortierfinger in die Sortierstellung oder zurück in die Förderstellung verschwenkt werden, bevor, während oder nachdem die ausgewählten Lenkfinger in die Lenkstellung oder die Freigabestellung überführt werden. Obwohl die Sortierfinger innerhalb einer Spur für das jeweilige Schlechtprodukt bevorzugt alle gleichzeitig betätigt werden, muss dies nicht zwingend so sein und kann je nach Produkt- und Prozessparametern auch nacheinander erfolgen. Gleiches gilt analog für die Lenkfinger. Erfindungsgemäß kann das Verschwenken der Sortierfinger aus der Förderstellung in die Sortierstellung und wieder zurück ebenso wie das Verschwenken der Lenkfinger aus der Freigabestellung in die Lenkstellung und wieder zurück sehr schnell und flexibel gesteuert werden. Bevorzugt werden die Sortierfinger bzw. die Lenkfinger zeitgesteuert bzw. zeitlich optimiert angesteuert, um in Abhängigkeit der herannahenden Gutprodukte oder Schlechtprodukte ihre gewünschte Stellung rechtzeitig einzunehmen und bevorzugt so lange beizubehalten, bis das Verschwenken in die jeweils andere Lage erforderlich wird.

Bevorzugt erfolgt die Ansteuerung so, dass zu einem Zeitpunkt oder während einer wählbaren Zeitdauer die Sortierfinger und die Lenkfinger gleichzeitig die Sortierstellung bzw. die Lenkstellung einnehmen. Weiterhin bevorzugt ist der Sortierer so ausgebildet, dass die Sortierfinger in der Sortierstellung parallel zu den Lenkfingern in der Lenkstellung angeordnet sind, und/oder dass die Sortierfinger in der Förderstellung parallel zu den Lenkfingern in der Freigabestellung angeordnet sind, um jeweils einen Kanal für das Schlechtprodukt bzw. Gutprodukt auszubilden.

Vorzugsweise sind die Sortierfinger oder Lenkfinger pneumatisch antreibbar mit einer separat ausgebildeten Kolben-Zylinder-Einheit pro Finger. Über geeignete flexible Druckluftschläuche kann jeder einzelne Finger mit einem Verteiler verbunden sein, der die jeweiligen Schläuche je nach gewünschter Schwenkbewegung durch Ansteuerung eines Ventils mit Druckluft beaufschlagt. Aufgrund der hohen Anzahl von Sortierfingern ist in einer vorteilhaften Ausführungsform ein für alle Sortierfinger gemeinsames Ventil-Rack vorgesehen. Das Rack erstreckt sich über die Breite des Zuführbandes. Im Rack sind entsprechend der Anzahl der Sortierfinger separate Kolben-Zylinder-Einheiten ausgebildet, wobei für jede Kolben-Zylinder-Einheit auch das oder die jeweils zugehörigen Ventile unmittelbar im Rack angeordnet sind. Daher ist nur eine für alle Ventile gemeinsam nutzbare Druckluftzuleitung zum Rack erforderlich. Die Verteilung der Druckluft zu den einzelnen Zylindern kann über einen in Querrichtung Y verlaufenden starren Kanal innerhalb des Racks erfolgen, wodurch die Vielzahl von separaten Zuleitungen eingespart werden kann. Je Finger ist bevorzugt ein ansteuerbares, elektromagnetisches Ventil vorgesehen. In gleicher Weise kann auch ein Rack für die Lenkfinger vorgesehen sein.

Die Sortierfinger bzw. Lenkfinger sind erforderlichenfalls auch in Zwischenstellungen bewegbar, die zwischen der Förderstellung und der Sortierstellung bzw. der Freigabestellung und der Lenkstellung liegen. Vorzugsweise können sich alle Finger außerdem je nach Antrieb wahlweise schlagartig oder verzögert oder stufenlos oder mit einer kontrollierten Geschwindigkeit zwischen den einzelnen Schwenkpositionen bewegen. Nachfolgend soll die Erfindung anhand von Ausführungsbeispielen näher erläutert werden. Dabei zeigen:
Fig. 1 eine erste, nicht beanspruchte Ausführungsform in Teilansicht mit einem Sortierfinger in Förderstellung;
Fig. 2 die Ansicht gemäß Figur 1 mit einem Sortierfinger in Sortierstellung;
Fig. 3 die Ansicht analog zu Figur 2 mit einem Sortierriemen am Sortierfinger;
Fig. 4 eine vereinfachte Seitenansicht einer erfindungsgemäßen Ausführungsform der Erfindung mit Lenkfingern;
Fig. 5 die Ansicht gemäß Figur 4 mit heruntergeklapptem Lenkfinger bzw. Sortierfinger und
Fig. 6 eine perspektivische, vereinfachte Ansicht eines Sortierers mit Sortierfingern und Lenkfingern.

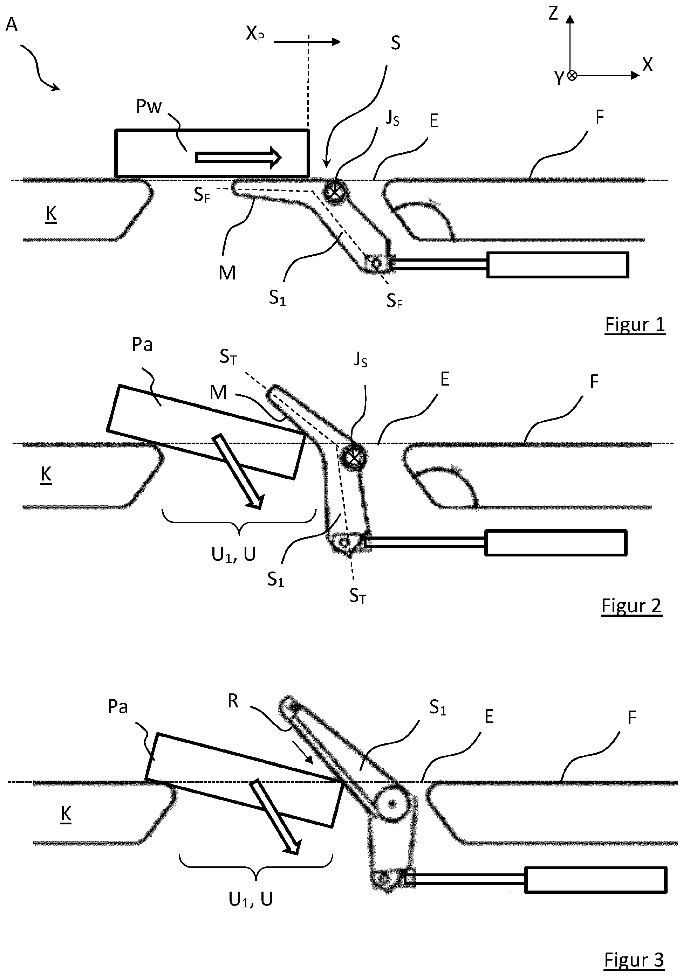

Figur 1 zeigt in vereinfachter Seitenansicht eine erste Ausführungsform eines Sortierers A. Der Sortierer A fördert einzelne Produkte Pₐ, P_{w} in einem Förderstrom in einer Förderrichtung X. Die Produkte werden dabei - von einem Zuführband K kommend - einer Sortieranordnung S zugeführt. Aus dem Förderstrom auszusortierende Schlechtprodukte Pₐ sollen durch eine von der Sortieranordnung gebildete Sortierlücke U ausgeschleust werden, während weiterzufördernde Gutprodukte P_{w} in Förderrichtung X auf eine an die Sortieranordnung S anschließende Förderfläche F in einer Förderebene E weitergefördert werden. Jedes Produkt definiert dabei durch seine Position in Querrichtung Y und seine Breite eine individuelle Spur, entlang welcher das Produkt auf dem Zuführband K in Förderrichtung X gefördert wird (die Darstellungen der Figuren 1 bis 5 sind Seitenansichten mit Blick in Querrichtung Y, so dass die Spuren der Produkte in diesen Darstellungen nicht zu erkennen sind). Die Oberseite des Zuführbands K und die Förderfläche F liegen in einer Förderebene E, die sich in Förderrichtung X und in einer dazu quer und horizontal verlaufenden Querrichtung Y erstreckt. Zu beiden Richtungen X, Y orthogonal verläuft die Höhenrichtung Z.

Das Zuführband K und die Förderfläche F sind in Förderrichtung X durch einen Zwischenraum voneinander beabstandet. In diesem Zwischenraum ist die Sortieranordnung S vorgesehen. Die Sortieranordnung S umfasst eine Vielzahl von in Querrichtung dicht (und vorzugsweise fluchtend) hintereinander liegenden, schmalen Sortierfingern S₁, S₂, S₃..., von denen in den Seitenansichten der Figuren 1 bis 5 jeweils nur ein Sortierfinger S₁ zu sehen ist, der die weiteren Sortierfinger S₂, S₃... verdeckt. Die Sortierfinger S₁, S₂, S₃... sind um eine gemeinsame, in Querrichtung Y verlaufende Sortierachse J_{S} schwenkbar, wobei jeder Sortierfinger unabhängig von den anderen Sortierfingern um die Sortierachse J_{S} aus einer Sortierstellung S_{T} in eine Förderstellung S_{F} und zurück verschwenkbar ist. Die Schwenkbewegung kann durch eine nicht näher bezeichnete Kolben-Zylinder-Einheit oder auch einen anderen, dem Fachmann bekannten Antrieb für jeden einzelnen Sortierfinger S₁, S₂, S₃... erfolgen.

Figur 1 zeigt den Sortierfinger S₁ in der Förderstellung S_{F}, wobei jeder Sortierfinger S₁, S₂, S₃... in dieser Förderstellung mit einem obersten Abschnitt in der Förderebene E liegt, sodass ein vom Zuführband K herangefördertes Gutprodukt P_{w}, gestützt durch die Oberseite des jeweiligen Sortierfingers, in Förderrichtung X weiter bis auf die Förderfläche F gefördert werden kann. Die Förderfläche F kann auch als Förderband zum Abtransportieren (Abführband) ausgebildet sein. In der Förderstellung S_{F} verschließt jeder Sortierfinger eine ihm zugeordnete Teillücke U₁, U₂, U₃... zwischen der Sortierachse J_{S} und dem stromaufwärts davon liegenden Zuführband K, wobei die Y-Breite jeder Teillücke U₁, U₂, U₃... der Breite des jeweiligen Sortierfingers S₁, S₂, S₃... entspricht.

Auf der Oberseite des Sortierfingers kann das Obertrum eines in den Figuren 1 und 2 nicht dargestellten, angetriebenen Transportriemens angeordnet sein, um die Weiterförderung des Gutproduktes zur Förderfläche F hin zu unterstützen. Bevorzugt wird die Transportriemengeschwindigkeit identisch gewählt zur Fördergeschwindigkeit des Zuführbands K und eines evtl. stromabwärts der Sortieranordnung vorgesehenen Abführbandes.

Figur 2 zeigt den Sortierer A gemäß Figur 1, wobei der Sortierfinger S₁ mit einem Abschnitt aus der Förderstellung S_{F} in die Sortierstellung S_{T} heraufgeklappt wurde (einige unmittelbar an den Sortierfinger S₁ angrenzende weitere Sortierfinger S₂, S₃...sind ebenfalls in die Sortierstellung verschwenkt worden, was in dieser Ansicht nicht zu erkennen ist. Weitere, nicht verschwenkte Sortierfinger in der Förderstellung sind aus Gründen der besseren Übersicht nicht dargestellt.). Jeder in die Sortierstellung verschwenkte Sortierfinger-Abschnitt ragt mit einer Sortierflanke M durch die Förderebene E hindurch nach oben. Gleichzeitig öffnet der jeweilige Sortierfinger S₁, S₂, S₃... damit seine Teillücke U₁, U₂, U₃..., wobei mehrere zueinander unmittelbar benachbarte Teillücken U₁, U₂, U₃... gemeinsam eine Sortierlücke U ausbilden, um ein Schlechtprodukt Pₐ durch die Sortierlücke U nach unten auszuschleusen. Um ein Schlechtprodukt Pₐ aus dem Produktstrom auszuschleusen, werden diejenigen Sortierfinger in die Sortierstellung S_{T} verschwenkt, die in der Spur des jeweiligen Schlechtproduktes liegen. Zu diesem in Querrichtung Y benachbarte weitere Sortierfinger außerhalb der Spur können die Förderstellung S_{F} beibehalten, um Gutprodukte P_{w} in deren jeweiliger Spur weiterhin auf die Förderfläche F fördern zu können.

Die in der Sortierstellung dem herannahenden Schlechtprodukt Pₐ zugewandte Sortierflanke M dient einerseits dazu, die jeweilige Teillücke U₁, U₂, U₃... zu öffnen. Außerdem beaufschlagt sie das herannahende Schlechtprodukt beim Kontakt mit einer senkrecht zur Förderebene E gerichteten Komponente einer Umlenkkraft, um das Schlechtprodukt aus der Förderrichtung X heraus und durch die Sortierlücke U herab zu drängen. Zur Verstärkung dieses Effekts sieht eine in Figur 3 vereinfacht dargestellte Variante dazu an der Sortierflanke M des Sortierfingers das Untertrum eines angetriebenen Sortierriemens R vor. Der Sortierriemen R ist in Richtung des kleinen Pfeils angetrieben, um ein den Sortierriemen kontaktierendes Schlechtprodukt Pₐ aktiv nach unten durch die Sortierlücke hindurch zu drängen.

Die Ausführungsformen gemäß den Figuren 1 bis 3 zeichnen sich dadurch aus, dass die Sortierfinger zum Sortieren mit einem Abschnitt aus der Förderstellung S_{F} heraus nach oben in den Förderweg bzw. die Spur eines Schlechtproduktes Pₐ heraufklappt, sodass die jeweilige Teillücke U₁, U₂, U₃... und die gemeinsam gebildete Sortierlücke U sich "zum Produkt hin" öffnet. Dabei kann der nach oben aufragende Abschnitt des Sortierfingers die Doppelfunktion erfüllen, einerseits die jeweilige Teillücke U₁, U₂, U₃... zu Öffnen und andererseits den Förderweg des Schlechtproduktes Pₐ in Richtung auf die Förderfläche F zu blockieren, um das Schlechtprodukt umzulenken. Die Sortierachse J_{S} liegt in diesem Fall in Bezug auf die Förderrichtung X stromabwärts der Teillücken bzw. der Sortierlücke U.

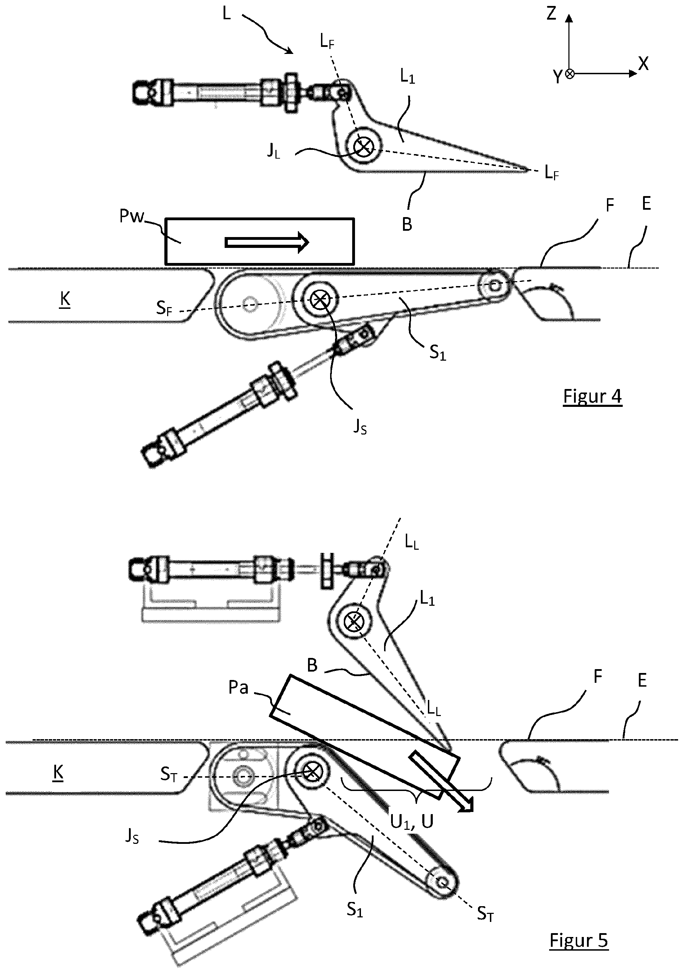

Eine alternative und erfindungsgemäße Ausführungsform eines Sortierers ist in den Figuren 4 und 5 dargestellt. Auch dort ist - insoweit analog zu den Ausführungsbeispielen - eine Sortieranordnung S mit einer Vielzahl von Sortierfingern S₁, S₂, S₃... in einem zwischen Zuführband K und Förderfläche F bestehenden Zwischenraum angeordnet. Wieder sind die Sortierfinger um eine gemeinsame, in Querrichtung Y verlaufende Sortierachse J_{S} aus einer Förderstellung S_{F} in eine Sortierstellung S_{T} und zurück schwenkbar, und sie liegen in der Förderstellung SF mit einem obersten Abschnitt in der Förderebene E. Allerdings werden die Sortierfinger zur Einnahme der Sortierstellung ST hier nach unten aus der Förderebene E herausgeklappt, wie in Figur 5 zu sehen ist. Die jeweilige Teillücke U1, U2, U3... jedes Sortierfingers S1, S2, S3... öffnet sich dabei in Bezug auf die Förderrichtung X stromabwärts der Sortierachse JS, umgekehrt zu den vorherigen Ausführungsbeispielen. Der Vorteil dieser Ausführungsform liegt darin, dass ein Verschwenken der Sortierfinger auch dann noch möglich ist, wenn ein Gutprodukt oder Schlechtprodukt die Sortierfinger bereits erreicht hat bzw. auf ihnen aufliegt. Dies erhöht die Flexibilität in der Ansteuerung der Sortierfinger und erlaubt es noch besser, in Förderrichtung X oder in Querrichtung Y sehr nah beieinander liegende Produkte gezielt auszusortieren oder weiterzufördern. Anders als bei den Ausführungsbeispielen der Figuren 1 bis 3 kann der Sortierfinger hier aber nicht gleichzeitig zur aktiven Umlenkung eines Schlechtproduktes genutzt werden. Stattdessen wirkt zum Aussortieren nur die Schwerkraft auf das in die Sortierlücke hinein bewegte Schlechtprodukt. Bei hohen Fördergeschwindigkeiten fällt das Schlechtprodukt daher eventuell nicht ausreichend tief, bevor das Ende der Sortierlücke erreicht ist, und schlägt infolgedessen gegen die daran anschließende Förderfläche F.

Um diesen Nachteil zu überwinden, ist der Sortierer mit einer oberhalb der Förderebene E angeordneten Lenkanordnung L ausgestattet. Ähnlich wie die Sortieranordnung umfasst die Lenkanordnung L eine Vielzahl von schmalen Lenkfingern L₁, L₂, L₃..., die in Querrichtung Y (vorzugsweise fluchtend) hintereinander angeordnet und um eine gemeinsame, in Querrichtung Y verlaufende Lenkachse J_{L} verschwenkbar sind. Auch die Lenkfinger sind unabhängig voneinander verschwenkbar, beispielsweise mittels einer Kolben-Zylinder-Einheit oder eines gleichwirkenden Antriebs. In einer Freigabestellung L_{F} liegen die Lenkfinger L₁, L₂, L₃... außerhalb des Förderweges der Produkte, so dass insbesondere Gutprodukte P_{w} unter den Lenkfingern hindurch auf die Förderfläche F gefördert werden können. In einer Lenkstellung L_{L} dagegen ragen die Lenkfinger mit einer Lenkflanke B in die Spur der Produkte, sodass deren Weiterförderung auf die Förderfläche F unterbunden wird. (Die Figuren 4 und 5 lassen nur einen ersten Lenkfinger L₁ erkennen. Weitere, in Querrichtung Y dahinter liegende Lenkfinger in der Freigabestellung oder der Lenkstellung sind aus Gründen der Übersichtlichkeit nicht zu sehen bzw. nicht dargestellt).

Die Lenkfinger L₁, L₂, L₃... können dazu verwendet werden, ein Schlechtprodukt Pₐ aktiv durch eine Sortierlücke U zu lenken, welche von in der entsprechenden Spur liegenden Sortierfingern S₁, S₂, S₃... in der Sortierstellung erzeugt wird. Ähnlich wie die Sortierflanke M der Sortierfinger in den Ausführungsbeispielen der Figuren 1 bis 3 erzeugt ein in die Lenkstellung L_{L} herabgeschwenkter Lenkfinger eine senkrecht zur Förderebene nach unten wirkende Komponente einer Umlenkkraft auf ein Schlechtprodukt, wenn es die Lenkflanke B des jeweiligen Lenkfingers erreicht.

Figur 5 veranschaulicht diesen Fall. Ein auszusortierendes Schlechtprodukt Pₐ soll durch eine von mehreren benachbarten Sortierfingern S₁, S₂, S₃... gemeinsam gebildete Sortierlücke U ausgeschleust werden. Die in der Spur des Schlechtproduktes Pₐ liegenden Sortierfinger sind dazu in die Sortierstellung S_{T} heruntergeklappt. Des Weiteren sind einige in der Spur des Schlechtproduktes liegende Lenkfinger L₁, L₂, L₃... aus der Freigabestellung L_{F} in die Lenkstellung L_{L} heruntergeklappt. Die heruntergeklappten Lenkfinger und Sortierfinger bilden dabei gemeinsam einen Kanal, der durch die Sortierlücke U führt. Das die Sortierlücke U erreichende Schlechtprodukt Pₐ wird durch den Kontakt mit der Lenkflanke B, zusätzlich zur Wirkung der Schwerkraft auf das Produkt, in und durch die Sortierlücke U hindurch gefördert und damit aussortiert. Die Bewegungen der Sortierfinger und der Lenkfinger können gleichzeitig oder zeitlich versetzt zueinander erfolgen, bevorzugt in Abhängigkeit der Fördergeschwindigkeit, der Produktabmessungen oder sonstiger physikalischer Produkteigenschaften sowie der Anordnung weiterer Produkte (Gutprodukte und Schlechtprodukte) auf dem Zuführband K.

Die Anzahl, Querposition und Breite der einzelnen Lenkfinger L₁, L₂, L₃... müssen nicht mit denjenigen der einzelnen Sortierfinger S₁, S₂, S₃... übereinstimmen. Bevorzugt ist die Anzahl der Lenkfinger geringer als die der Sortierfinger, da zum Umlenken eines Produktes nicht alle Lenkfinger in der Spur des Produktes in die Lenkstellung verschwenkt werden müssen.

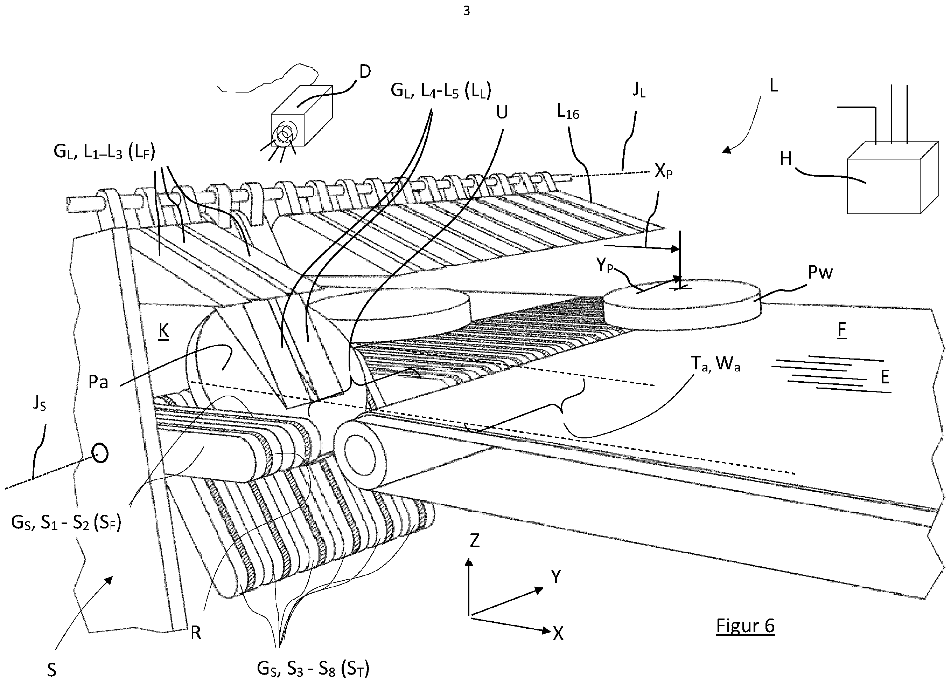

Figur 6 zeigt die Ausführungsform gemäß Figur 4 und 5 in vereinfachter perspektivischer Ansicht. Auf dem Zuführband K werden weiterzufördernde Gutprodukte P_{w} und auszuschleusende Schlechtprodukte Pₐ in Förderrichtung X an die Sortieranordnung S heran gefördert. Jedes Produkt definiert dabei seine eigene Spur. Ein auszusortierendes Produkt Pₐ mit der in Querrichtung Y gemessenen Querbreite Wₐ wird in seiner zugehörigen Spur Tₐ gefördert. Die Lage jedes Produktes wird durch seine Querposition Y_{P} und seine Längsposition X_{P} bestimmt, beispielsweise bezogen auf den Schwerpunkt oder Mittelpunkt des Produkts relativ zu einem ortsfesten Bezugspunkt. Mithilfe einer Kamera als Detektionsmittel D kann für jedes auszusortierende oder weiterzufördernde Produkt dessen aktuelle Lage und/oder die zugehörige Spur auf dem Zuführband einmalig oder wiederholt ermittelt werden. Die Spur Tₐ des auszusortierenden Produktes Pₐ ist in Figur 6 angedeutet und durch dessen Lage und Breite bestimmt, die Spuren der beiden anderen Produkte wurden aus Übersichtsgründen nicht näher dargestellt.

Um das Produkt Pₐ aus dem Produktstrom ausschleusen zu können, ist eine Gruppe G_{S} von Sortierfingern (im vorliegenden Fall die Sortierfinger S₃ bis S₈) aus der Förderstellung S_{F} in die Sortierstellung S_{T} heruntergeklappt, um dadurch eine Sortierlücke U im Förderweg des Produktes Pₐ auszubilden. Alle anderen Sortierfinger nehmen unverändert die Förderstellung S_{F} ein, wozu die Gruppe G_{S} mit den Sortierfingern S₁ und S₂ auf der einen Seite der Sortierlücke U ebenso gehört wie die weitere, nicht näher bezeichnete Gruppe mit den Sortierfingern auf der anderen Seite der Sortierlücke.

Um das Ausschleusen zu erleichtern, ist von der oberhalb der Sortieranordnung S positionierten Lenkanordnung L mit 16 Lenkfingern eine Gruppe G_{L}, gebildet aus den Lenkfingern L₄ und L₅, die in der Spur Tₐ des Produktes Pₐ liegen, aus der Freigabestellung L_{F} in die Lenkstellung L_{L} heruntergeklappt. Das die Lenkfinger L₄, L₅ erreichende Produkt Pₐ wird von diesen mit einer nach unten gerichteten Komponente einer Umlenkkraft beaufschlagt, sodass das Produkt zusätzlich zur Schwerkraft auch aktiv durch die Sortierlücke U hindurch gedrängt wird. Weitere, nicht auszuschleusende Gutprodukte P_{w} können währenddessen über die in der Förderstellung S_{F} verbliebenen Sortierfinger weiter auf die als Abführband ausgebildete Förderfläche F gefördert werden. Entsprechend nehmen nicht benötigte Lenkfinger die Freigabestellung L_{F} ein (im dargestellten Fall sind dies die Gruppen G_{L} mit den Lenkfingern L₁ bis L₃ sowie L₆ bis L₁₆.). Nicht alle Lenkfinger in der Spur eines auszusortierenden Produktes Pₐ müssen in die Lenkerstellung L_{L} heruntergeklappt werden. Je nach Beschaffenheit des Produktes und der Fördergeschwindigkeit kann es genügen, nur einen oder zwei Lenkfinger dazu zu verwenden. Dies können zum Beispiel die beiden mittleren oder die beiden äußeren Lenkfinger der zugehörigen Spur sein. Sollte das Produkt allein aufgrund der Schwerkraft sicher auszuschleusen sein, kann sich die Betätigung der Lenkfinger auch vollständig erübrigen. Sobald ein auszuschleusendes Produkt durch die Sortierlücke U gelangt ist, können die dazu betätigten Finger wieder in die Freigabestellung bzw. Förderstellung heraufgeklappt werden, sofern nicht ein unmittelbar nachfolgendes, auszuschleusendes Produkt die Beibehaltung der vorherigen Fingerstellung rechtfertigt.

Die Sortierfinger sind mit einem Transportriemen R ausgestattet, dessen Obertrum sich mit der durch das Zuführband K und das Abführband F vorgegebenen Geschwindigkeit in Förderrichtung X bewegt, um ein darauf aufliegendes Gutprodukt P_{w} in der Förderstellung S_{F} oder in der Sortierstellung S_{T} möglichst unverzögert weiterfördern zu können.

Eine nur vereinfacht dargestellte Steuereinheit H dient dazu, unter Auswertung der Kamerasignale die Spuren Tₐ der auszusortierenden Produkte und ihre Längspositionen X_{P} zu ermitteln, um zu einem geeigneten Zeitpunkt die passenden Sortierfinger und die Lenkfinger anzusteuern. Die Steuereinheit kann auch Signale betreffend die Fördergeschwindigkeit, die Produkteigenschaften, die Anzahl der Ausschleusungen etc. verarbeiten oder generieren sowie über geeignete Schnittstellen ausgeben bzw. empfangen.

### Bezugszeichen

- A: Sortierer
- B: Lenkflanke
- D: Detektionsmittel
- E: Förderebene
- F: Förderfläche
- G_{L}: Gruppe von Lenkfingern
- G_{S}: Gruppe von Sortierfingern
- H: Steuereinheit
- J_{L}: Lenkachse
- J_{S}: Sortierachse
- K: Zuführband
- L: Lenkanordnung
- L₁, L₂, L₃...: Lenkfinger
- L_{F}: Freigabestellung
- L_{L}: Lenkstellung
- M: Sortierflanke
- Pₐ: Schlechtprodukt, zum Aussortieren
- P_{w}: Gutprodukt, zum Weiterfördern
- R: Transportriemen
- S: Sortieranordnung
- S₁, S₂, S₃...: Sortierfinger
- S_{F}: Förderstellung
- S_{T}: Sortierstellung
- Tₐ: Spur eines auszusortierenden Produkts
- U: Sortierlücke
- U₁, U₂, U₃...: Teillücke
- Wₐ: Breite eines auszusortierenden Produktes in Querrichtung Y
- X: Förderrichtung
- X_{P}: Längsposition eines Produktes
- Y: Querrichtung
- Y_{P}: Querposition eines Produktes
- Z: Höhenrichtung

## Patentansprüche

1. Sortierer (A) zum Sortieren diskreter Produkte aus einem Produktstrom, wobei der Produktstrom Schlechtprodukte (Pₐ) zum Sortieren und Gutprodukte (P_{w}) zum Weiterfördern enthält, und wobei die Produkte (Pₐ, P_{w}) insbesondere uneinheitliche Geometrien und/oder Abstände zueinander aufweisen, und mittels eines Zuführbands (K) in einer Förderrichtung (X) gefördert werden, welche sich orthogonal zu einer Querrichtung (Y) erstreckt,
a) wobei jedes Schlechtprodukt (Pₐ) durch seine Position auf dem Zuführband eine ihm individuell zugeordnete Spur (Tₐ) definiert, auf der es in Förderrichtung (X) gefördert wird, wobei die Lage der Spur (Tₐ) in Querrichtung (Y) und ihre Spurbreite definiert ist durch die Querposition (Yₐ) und die Produktbreite (Wₐ) dieses Schlechtproduktes (Pₐ),
b) und wobei die Oberseite des Zuführbands (K) mit der Förderrichtung (X) und einer dazu orthogonal verlaufenden Querrichtung (Y) eine Förderebene (E) definiert,
c) und wobei der Sortierer (A) eine Sortieranordnung (S) von wenigstens drei, vorzugsweise einer Vielzahl von bevorzugt baugleichen, schmalen Sortierfingern (S₁, S₂, S₃...) umfasst, die in Querrichtung (Y), bevorzugt fluchtend, nebeneinander liegen und jeweils aus einer Sortierstellung (S_{T}) in eine Förderstellung (S_{F}) und zurück bewegbar sind, und wobei jeder Sortierfinger (S₁, S₂, S₃...) dazu ausgebildet ist,
c₁) in der Sortierstellung (S_{T}) eine einem jeweiligen Sortierfinger (S₁, S₂, S₃...) zugeordnete Teillücke (U₁, U₂, U₃...) in der Förderebene (E) freizugeben, um ein der Sortieranordnung (S) zugeführtes Schlechtprodukt (Pₐ) aus der Förderrichtung (X) heraus- und durch eine aus mehreren benachbarten Teillücken (U₁, U₂, U₃...) gemeinsam gebildete Sortierlücke (U) hindurch aussortieren zu können, und
c₂) in der Förderstellung (SF) die zugehörige Teillücke (U₁, U₂, U₃...) zu verschließen, um ein Gutprodukt (P_{w}) in der Förderebene (E) weiterfördern zu können,
d) wobei der Sortierer dazu ausgelegt ist, die in der Spur (Tₐ) eines Schlechtproduktes (Pₐ) liegenden Sortierfinger (S₁, S₂, S₃...) in die Sortierstellung (S_{T}) zu bewegen und dort zu halten, um dadurch eine zum Schlechtprodukt (Pₐ) passende Sortierlücke (U) in dessen individueller Spur (Tₐ) ausbilden,
e) und wobei wenigstens drei, vorzugsweise alle Sortierfinger (S₁, S₂, S₃...) der Sortieranordnung (S) jeweils unabhängig voneinander von der Sortierstellung (S_{T}) in die Förderstellung (S_{F}) und zurück bewegbar sind
f) wobei jeder Sortierfinger (S₁, S₂, S₃...) zwischen sich und einer stromabwärts angrenzenden Förderfläche (F) die Teillücke (U₁, U₂, U₃...) freigibt, indem er aus der Förderstellung (S_{F}) zur Einnahme der Sortierstellung (S_{T}) mit einem Abschnitt nach unten wegklappt,
g) **dadurch gekennzeichnet, dass**
g1) Detektionsmittel (D) vorgesehen sind, mit denen die Spur (Ta) und die Längsposition (XP) eines Schlechtproduktes (Pa) auf dem Zuführband (K) detektierbar sind,
oder
g2) die Spur beschreibende Angaben dem Sortierer von einer externen Steuereinheit zugeführt werden,
oder
g3) die Spur bereits stromaufwärts des Zuführbandes erfasst wird und sich nachfolgend nicht verändert,
um diejenigen Sortierfinger (S1, S2, S3...) betätigen zu können, die in der Spur (Ta) liegen und deren zugehörige Teillücken (L1, L2, L3...) gemeinsam eine ausreichend breite Sortierlücke (U) bilden, um das an der Sortierlücke (U) eintreffende Schlechtprodukt (Pa) dort auszusortieren.

2. Sortierer (A) nach Anspruch 1, **dadurch gekennzeichnet, dass** jeder Sortierfinger (S₁, S₂, S₃...) in der Förderstellung (S_{F}) mit einem obersten Förderabschnitt, welcher vorzugsweise einen antreibbaren Transportriemen aufweist, in der Förderebene (E) liegt, um die Gutprodukte (P_{w}) beim Weitertransport in Förderrichtung (X) zu stützen und/oder zu fördern.

3. Sortierer (A) nach Anspruch 1 oder 2, ferner aufweisend eine oberhalb der Sortieranordnung (S) oder der Förderebene (E) positionierte Lenkanordnung (L) von wenigstens drei, vorzugsweise einer Vielzahl von bevorzugt baugleichen Lenkfingern (L₁, L₂, L₃...), die in Querrichtung (Y), bevorzugt fluchtend, nebeneinander liegen und jeweils aus einer Lenkstellung (L_{L}) in eine Freigabestellung (L_{F}) und zurück bewegbar sind, wobei jeder Lenkfinger (L₁, L₂, L₃...) dazu ausgebildet ist,
a) in der Lenkstellung (L_{L}) ein Schlechtprodukt (Pₐ) mit einer senkrecht zur Förderebene (E) wirkenden Kraft zu beaufschlagen und in eine von einer Gruppe (G_{S}) aus mehreren Sortierfingern (S₁, S₂, S₃...) ausgebildete Sortierlücke (U) zu lenken, und
b) in der Freigabestellung (L_{F}) den Förderweg für Gutprodukte (P_{w}) freizugeben.

4. Sortierer (A) nach dem vorhergehenden Anspruch, **dadurch gekennzeichnet, dass** wenigstens zwei, vorzugsweise alle Lenkfinger (L₁, L₂, L₃...) jeweils unabhängig voneinander von der Lenkstellung (L_{L}) in die Freigabestellung (L_{F}) und zurück bewegbar sind.

5. Sortierer (A) nach Anspruch 3 oder 4, **dadurch gekennzeichnet, dass** jeder Lenkfinger (L₁, L₂, L₃...) in der Lenkstellung (L_{L}) eine dem Schlechtprodukt (Pₐ) zugewandte Lenkflanke (B), vorzugsweise umfassend einen antreibbaren Lenkriemen, aufweist, um das Schlechtprodukt (Pₐ) beim Kontakt mit der Lenkflanke (B) aus der Förderrichtung (X) heraus und durch die Teillücke (U₁, U₂, U₃...) zu lenken und/oder zu fördern.

6. Sortierer (A) nach einem der vorigen Ansprüche, **dadurch gekennzeichnet, dass** die Sortierfinger (S₁, S₂, S₃...) zur Bewegung zwischen Sortierstellung (S_{T}) und Förderstellung (S_{F}) jeweils um eine, bevorzugt eine gemeinsame, in Querrichtung (Y) verlaufende Schwenkachse schwenkbar sind, und/oder dass die Lenkfinger (L₁, L₂, L₃...) zur Bewegung zwischen Lenkstellung (L_{L}) und Freigabestellung (L_{F}) jeweils um eine, bevorzugt eine gemeinsame, in Querrichtung (Y) verlaufende Schwenkachse schwenkbar sind.

7. Sortierer (A) nach einem der Ansprüche 3 bis 6, der dazu ausgebildet ist, eine Gruppe (G_{L}) von Lenkfingern, welche einen oder mehrere Lenkfinger (L₁, L₂, L₃...) beinhaltet, in die Lenkstellung (L_{L}) zu bewegen und dort zu halten, wobei die Lenkfinger der Gruppe (G_{L}) dabei in Bezug auf die Querrichtung (Y) vorzugsweise innerhalb der Sortierlücke (U) liegen.

8. Verfahren zum Aussortieren von Schlechtprodukten (Pₐ) aus einem Förderstrom mit einem Sortierer (A) nach einem der vorigen Ansprüche, umfassend folgende Schritte:
1. Ermitteln der Spur (Tₐ) eines auszusortierenden, auf dem Zuführband (K) geförderten Schlechtproduktes (Pₐ),
2. Ermitteln der Gruppe (G_{S}) der in der Spur (Tₐ) liegenden Sortierfinger (S₁, S₂, S₃...)
3. Bewegen der Sortierfinger der Gruppe (G_{S}) aus der Förderstellung (S_{F}) in die Sortierstellung (S_{T}), um eine Sortierlücke (U) auszubilden und das Schlechtprodukt (Pₐ) durch die Sortierlücke (U) hindurch auszusortieren.

9. Verfahren nach dem vorhergehenden Anspruch, wobei das Ermitteln der Spur (Ta) erfolgt mit Hilfe wenigstens eines Detektors, bevorzugt mit einer Kamera mit zugehörigem Bilderkennungsverfahren, welches die Breite (Wₐ) und/oder die Querposition (Yₐ) eines Schlechtproduktes (Pₐ) auf dem Zuführband (K) erfasst.

10. Verfahren nach einem der beiden vorhergehenden Ansprüche, wobei die Fördergeschwindigkeit des Schlechtproduktes (Pₐ) und/oder dessen Längsposition (X_{P}) auf dem Zuführband (K) bestimmt wird
a) mit Hilfe einer Kamera und eines Bilderkennungsverfahrens, oder
b) unter Auswertung der Betriebsdaten des Zuführbands (K),
um denjenigen Zeitpunkt zu bestimmen, zu dem das Schlechtprodukt (Pₐ) die Sortierlücke (U) erreicht.

11. Verfahren nach einem der Ansprüche 8 bis 10 zum Aussortieren von Schlechtprodukten (Pₐ) aus einem Förderstrom mit einem Sortierer (A) nach einem der Ansprüche 3 bis 7, umfassend folgenden Verfahrensschritt:
Auswahl einer Gruppe (G_{L}) von Lenkfingern (L₁, L₂, L₃...), die in Bezug auf die Querrichtung (Y) vorzugsweise innerhalb der Spur (Tₐ) liegen, und Bewegen dieser Lenkfinger aus der Freigabestellung (L_{F}) in die Lenkstellung (L_{L}) so, dass zu einem Zeitpunkt oder während einer wählbaren Zeitdauer die Sortierfinger der Gruppe (G_{S}) und die Lenkfinger der Gruppe (G_{L}) gleichzeitig die Sortierstellung (S_{T}) bzw. die Lenkstellung (L_{L}) einnehmen.

12. Verfahren nach einem der vorhergehenden Verfahrensansprüche, **dadurch gekennzeichnet, dass** die Ermittlung der Spur (Tₐ) für alle auszusortierenden, auf dem Zuführband (K) geförderten Schlechtprodukte (Pₐ) pro Produkt einmalig oder zyklisch wiederholt oder permanent erfolgt oder überprüft wird.

## Claims

1. Sorter (A) for sorting discrete products out of a product stream, the product stream containing bad products (Pₐ) to be sorted and good products (P_{w}) to be conveyed further, and the products (Pₐ, P_{w}) in particular having non-uniform geometries and/or distances from one another, and being conveyed by means of a feed belt (K) in a conveying direction (X) which extends orthogonally to a transverse direction (Y),
a) each bad product (Pₐ) defining, by its position on the feed belt, a track (Tₐ), individually assigned thereto, on which it is conveyed in the conveying direction (X), the position of the track (Tₐ) in the transverse direction (Y) and its track width being defined by the transverse position (Yₐ) and the product width (Wₐ) of this bad product (Pₐ),
b) and the upper side of the feed belt (K) defining a conveying plane (E) by the conveying direction (X) and a transverse direction (Y) orthogonal thereto,
c) and the sorter (A) comprising a sorting arrangement (S) of at least three, preferably a plurality of preferably identical, narrow sorting fingers (S₁, S₂, S₃...) which are located, preferably aligned, next to one another in the transverse direction (Y) and can each be moved from a sorting position (S_{T}) into a conveying position (S_{F}) and back, and each sorting finger (S₁, S₂, S₃...) being designed
c₁) to release, in the sorting position (S_{T}), a partial gap (U₁, U₂, U₃) assigned to a particular sorting finger (S₁, S₂, S₃...) in the conveying plane (E) in order to be able to sort a bad product (Pₐ), fed to the sorting arrangement (S), out of the conveying direction (X) and through a sorting gap (U) formed jointly by a plurality of adjacent partial gaps (U₁, U₂, U₃...), and
c₂) to close, in the conveying position (SF), the associated partial gap (U₁, U₂, U₃...) in order to be able to convey a good product (P_{w}) further in the conveying level (E),
d) the sorter being designed to move the sorting finger (S₁, S₂, S₃...) located in the track (Tₐ) of a bad product (Pₐ) into the sorting position (S_{T}) and to hold it there in order to form a sorting gap (U) matching the bad product (Pₐ) in its individual track (Tₐ),
e) and it being possible to move at least three, preferably all sorting fingers (S₁, S₂, S₃...) of the sorting arrangement (S) each independently from the sorting position (S_{T}) into the conveying position (S_{F}) and back,
f) each sorting finger (S₁, S₂, S₃...) releasing, between itself and a downstream adjoining conveying surface (F), the partial gap (U₁, U₂, U₃...) by folding down one portion from the conveying position (S_{F}) to adopt the sorting position (S_{T}),
g) **characterized in that**
g1) detection means (D) are provided by means of which the track (Ta) and the longitudinal position (XP) of a bad product (Pa) on the feed belt (K) can be detected,
or
g2) information describing the track is supplied to the sorter by an external control unit,
or
g3) the track is already detected upstream of the feed belt and does not subsequently change,
in order to be able to actuate those sorting fingers (S1, S2, S3...) which are located in the track (Ta) and the associated partial gaps (L1, L2, L3...) of which together form a sufficiently wide sorting gap (U) in order to sort out the bad product (Pa) arriving at the sorting gap (U).

2. Sorter (A) according to claim 1, **characterized in that,** in the conveying position (S_{F}), an uppermost conveyor portion of each sorting finger (S₁, S₂, S₃...) is located in the conveyor plane (E), which uppermost conveyor portion preferably has a drivable conveyor belt, in order to support and/or convey the good products (P_{w}) during further transport in the conveying direction (X).

3. Sorter (A) according to claim 1 or 2, further comprising a steering arrangement (L), positioned above the sorting arrangement (S) or the conveying plane (E), of at least three, preferably a plurality of preferably identical steering fingers (L₁, L₂, L₃...) which are arranged, preferably aligned, next to one another in the transverse direction (Y) and can each be moved from a steering position (L_{L}) into a release position (L_{F}) and back, wherein each steering finger (L₁, L₂, L₃...) is designed
a) to apply, in the steering position (L_{L}), a force acting perpendicularly to the conveying plane (E) to a bad product (Pₐ) and to steer the bad product into a sorting gap (U) formed by a group (Gₛ) of a plurality of sorting fingers (S₁, S₂, S₃...), and
b) to release, in the release position (L_{F}), the conveying path for good products (P_{w}).

4. Sorter (A) according to the preceding claim, **characterized in that** at least two, preferably all steering fingers (L₁, L₂, L₃...) can each independently be moved from the steering position (L_{L}) into the release position (L_{F}) and back.

5. Sorter (A) according to claim 3 or 4, **characterized in that,** in the steering position (L_{L}), each steering finger (L₁, L₂, L₃...) has a steering flank (B) facing the bad product (Pₐ) and preferably comprising a drivable steering belt, for steering and/or conveying the bad product (Pₐ), upon contact with the steering flank (B), out of the conveying direction (X) and through the partial gap (U₁, U₂, U₃...).

6. Sorter (A) according to any of the preceding claims,
**characterized in that,** in order to move between sorting position (S_{T}) and conveying position (S_{F}), the sorting fingers (S₁, S₂, S₃...) are each pivotable about a pivot axis, preferably a common pivot axis, extending in the transverse direction (Y), **and/or in that,** in order to move between steering position (L_{L}) and release position (L_{F}), the steering fingers (L₁, L₂, L₃...) are each pivotable about a pivot axis, preferably a common pivot axis, extending in the transverse direction (Y).

7. Sorter (A) according to any of claims 3 to 6, which is designed to sort a group (G_{L}) of steering fingers, which group has one or more steering fingers (L₁, L₂, L₃...), into the steering position (L_{L}) and hold it there, wherein the steering fingers of the group (G_{L}) are preferably located within the sorting gap (U) with respect to the transverse direction (Y).

8. Method for sorting bad products (Pₐ) out of a conveying stream using a sorter (A) according to any of the preceding claims, comprising the following steps:
1. determining the track (Tₐ) of a bad product (Pₐ) which is to be sorted out and is conveyed on the feed belt (K),
2. determining the group (Gₛ) of sorting fingers (S₁, S₂, S₃...) located in the track (Tₐ),
3. moving the sorting fingers of the group (Gₛ) from the conveying position (S_{F}) into the sorting position (S_{T}) to form a sorting gap (U) and to sort out the bad product (Pₐ) through the sorting gap (U).

9. Method according to the preceding claim, wherein the track (Ta) is determined with the aid of at least one detector, preferably a camera together with an associated image recognition method, which determines the width (Wₐ) and/or the transverse position (Yₐ) of a bad product (Pₐ) on the feed belt (K).

10. Method according to one of the two preceding claims, wherein the conveying speed of the bad product (Pₐ) and/or its longitudinal position (Xₚ) on the feed belt (K) is determined
a) using a camera and an image recognition method, or
b) by evaluating the operating data relating to the feed belt (K) to determine the point in time at which the bad product (Pₐ) reaches the sorting gap (U).

11. Method according to any of claims 8 to 10 for sorting bad products (Pₐ) out of a conveying stream using a sorter (A) according to any of claims 3 to 7, comprising the following method step:
selecting a group (G_{L}) of steering fingers (L₁, L₂, L₃...) which, with respect to the transverse direction (Y), is preferably located within the track (Tₐ) and moving these steering fingers from the release position (L_{F}) into the steering position (L_{L}) so that, at a point in time or during a selectable period of time, the sorting fingers of the group (G_{S}) and the steering fingers of the group (G_{L}) simultaneously adopt the sorting position (S_{T}) or the steering position (L_{L}).

12. Method according to any of the preceding method claims,
**characterized in that,** for each product, determining the track (Tₐ) for all bad products (Pₐ) which are to be sorted out and are conveyed on the feed belt (K) takes place or is checked once or cyclically repeatedly or permanently.

## Revendications

1. Trieur (A) permettant de trier des produits discrets provenant d'un flux de produits, dans lequel le flux de produits contient des mauvais produits (Pₐ) pour le tri et des bons produits (P_{w}) pour la poursuite du transport, et dans lequel les produits (Pₐ, P_{w}) présentent en particulier des géométries et/ou des distances non uniformes les uns par rapport aux autres, et sont transportés au moyen d'une bande d'alimentation (K) dans une direction de transport (X) qui s'étend orthogonalement à une direction transversale (Y),
a) dans lequel chaque mauvais produit (Pₐ) définit par son positionnement sur la bande d'alimentation une voie (Tₐ) qui lui est individuellement attribuée et sur laquelle il est transporté dans la direction de transport (X), dans lequel l'emplacement de la voie (Tₐ) dans la direction transversale (Y) et sa largeur de voie sont définies par le positionnement transversal (Yₐ) et la largeur de produit (Wₐ) dudit mauvais produit (Pₐ),
b) et dans lequel le côté supérieur de la bande d'alimentation (K) définit un plan de transport (E) avec la direction de transport (X) et une direction transversale (Y) s'étendant orthogonalement à celle-ci,
c) et dans lequel le trieur (A) comprend un agencement de tri (S) d'au moins trois, de préférence d'une pluralité de doigts de tri (S₁, S₂, S₃...) étroits, de préférence de construction identique, qui se trouvent côte à côte dans la direction transversale (Y), de préférence alignés, et qui peuvent être déplacés respectivement d'une position de tri (S_{T}) à une position de transport (S_{F}) et inversement, et dans lequel chaque doigt de tri (S₁, S₂, S₃...) est conçu pour,
c₁) dans la position de tri (S_{T}), libérer un espace partiel (U₁, U₂, U₃) attribué à un doigt de tri (S₁, S₂, S₃...) respectif dans le plan de transport (E), pour pouvoir sortir par triage un mauvais produit (Pₐ) alimenté à l'agencement de tri (S) en dehors de la direction de transport (X) et à travers un espace de tri (U) formé en commun par plusieurs espaces partiels (U₁, U₂, U₃...) voisins, et
c₂) dans la position de transport (SF), fermer l'espace partiel (U₁, U₂, U₃...) associé pour pouvoir continuer à transporter un bon produit (P_{w}) dans le plan de transport (E),
d) dans lequel le trieur est réalisé pour déplacer les doigts de tri (S₁, S₂, S₃...) situés dans la voie (Tₐ) d'un mauvais produit (Pₐ) vers la position de tri (S_{T}) et pour les y maintenir, pour concevoir ainsi un espace de tri (U) adapté au mauvais produit (Pₐ) dans sa voie (Tₐ) individuelle,
e) et dans lequel au moins trois, de préférence tous les doigts de tri (S₁, S₂, S₃...) de l'agencement de tri (S) peuvent être déplacés respectivement indépendamment les uns des autres de la position de tri (S_{T}) à la position de transport (S_{F}) et inversement
f) dans lequel chaque doigt de tri (S₁, S₂, S₃...) libère l'espace partiel (U₁, U₂, U₃...) entre lui et une surface de transport (F) adjacente en aval, en se rabattant avec une section vers le bas à partir de la position de transport (S_{F}) pour la prise de la position de tri (S_{T}),
g) **caractérisé en ce que**
g1) des moyens de détection (D) sont prévus, avec lesquels la voie (Ta) et le positionnement longitudinal (XP) d'un mauvais produit (Pa) sur la bande d'alimentation (K) peuvent être détectées,
ou
g2) des indications décrivant la voie sont alimentées au trieur par une unité de commande externe,
ou
g3) la voie est déjà capturée en amont de la bande d'alimentation et ne change pas par la suite,
pour pouvoir actionner les doigts de tri (S1, S2, S3...) qui se trouvent dans la voie (Ta) et dont les espaces partiels (L1, L2, L3...) associés forment ensemble un espace de tri (U) suffisamment large pour d'y sortir par triage le mauvais produit (Pa) arrivant à l'espace de tri (U).

2. Trieur (A) selon la revendication 1, **caractérisé en ce que** chaque doigt de tri (S₁, S₂, S₃...) se trouve dans le plan de transport (E) dans la position de transport (S_{F}) avec une section de transport supérieure, qui présente de préférence une courroie de transport pouvant être entraînée, pour soutenir et/ou de transporter les bons produits (P_{w}) lors de la poursuite du transport dans la direction de transport (X).

3. Trieur (A) selon la revendication 1 ou 2, présentant en outre un agencement de direction (L), positionné au-dessus de l'agencement de tri (S) ou du plan de transport (E), d'au moins trois, de préférence d'une pluralité de doigts de direction (L₁, L₂, L₃...), de préférence de construction identique, qui se trouvent côte à côte dans la direction transversale (Y), de préférence alignés, et qui peuvent être déplacés respectivement d'une position de direction (L_{L}) dans une position de libération (L_{F}) et inversement, dans lequel chaque doigt de direction (L₁, L₂, L₃...) est conçu pour,
a) dans la position de direction (L_{L}), soumettre un mauvais produit (Pₐ) à une force agissant perpendiculairement au plan de transport (E) et à le diriger dans un espace de tri (U) conçu par un groupe (Gₛ) de plusieurs doigts de tri (S₁, S₂, S₃...), et
b) dans la position de libération (L_{F}), libérer la trajectoire de transport pour les bons produits (P_{w}).

4. Trieur (A) selon la revendication précédente, **caractérisé en ce qu'**au moins deux, de préférence tous les doigts de direction (L₁, L₂, L₃...) peuvent être déplacés respectivement indépendamment les uns des autres de la position de direction (L_{L}) à la position de libération (L_{F}) et inversement.

5. Trieur (A) selon la revendication 3 ou 4, **caractérisé en ce que** chaque doigt de direction (L₁, L₂, L₃...) présente, dans la position de direction (L_{L}), un flanc de direction (B) orienté vers le mauvais produit (Pₐ), comprenant de préférence une courroie de direction pouvant être entraînée, pour diriger et/ou de transporter le mauvais produit (Pₐ), lors du contact avec le flanc de direction (B), hors de la direction de transport (X) et à travers l'espace partiel (U₁, U₂, U₃...).

6. Trieur (A) selon l'une des revendications précédentes,
**caractérisé en ce que** les doigts de tri (S₁, S₂, S₃...) peuvent pivoter autour d'un axe de pivotement, de préférence commun, s'étendant dans la direction transversale (Y), pour le déplacement entre la position de tri (S_{T}) et la position de transport (S_{F}), **et/ou en ce que** les doigts de direction (L₁, L₂, L₃...) peuvent pivoter autour d'un axe de pivotement, de préférence commun, s'étendant dans la direction transversale (Y), pour le déplacement entre la position de direction (L_{L}) et la position de libération (L_{F}).

7. Trieur (A) selon l'une des revendications 3 à 6, qui est conçu pour déplacer un groupe (G_{L}) de doigts de direction, qui contient un ou plusieurs doigts de direction (L₁, L₂, L₃...), vers la position de direction (L_{L}) et pour le ou les y maintenir, dans lequel les doigts de direction du groupe (G_{L}) se trouvent alors de préférence à l'intérieur de l'espace de tri (U) par rapport à la direction transversale (Y).

8. Procédé permettant de sortir par triage des mauvais produits (Pₐ) d'un flux de transport comportant un trieur (A) selon l'une des revendications précédentes, comprenant les étapes suivantes:
1. détermination de la voie (Tₐ) d'un mauvais produit (Pₐ) à sortir par triage, transporté sur la bande d'alimentation (K),
2. détermination du groupe (Gₛ) des doigts de tri (S₁, S₂, S₃...) se trouvant dans la voie (Tₐ)
3. déplacement des doigts de tri du groupe (Gₛ) de la position de transport (S_{F}) à la position de tri (S_{T}) pour concevoir un espace de tri (U) et pour sortir par triage le mauvais produit (Pₐ) à travers l'espace de tri (U).

9. Procédé selon la revendication précédente, dans lequel la détermination de la voie (Ta) est effectuée à l'aide d'au moins un détecteur, de préférence une caméra avec un procédé de reconnaissance d'image associé, qui capture la largeur (Wₐ) et/ou le positionnement transversal (Yₐ) d'un mauvais produit (Pₐ) sur la bande d'alimentation (K).

10. Procédé selon l'une des deux revendications précédentes, dans lequel la vitesse de transport du mauvais produit (Pₐ) et/ou son positionnement longitudinal (Xₚ) sur la bande d'alimentation (K) sont déterminés
a) à l'aide d'une caméra et d'un procédé de reconnaissance d'image; ou
b) en évaluant les données de fonctionnement de la bande d'alimentation (K), pour déterminer le moment où le mauvais produit (Pₐ) atteint l'espace de tri (U).

11. Procédé selon l'une des revendications 8 à 10 permettant de sortir par triage des mauvais produits (Pₐ) dans un flux de transport avec un trieur (A) selon l'une des revendications 3 à 7, comprenant l'étape de procédé suivante:
sélection d'un groupe (G_{L}) de doigts de direction (L₁, L₂, L₃...) se trouvant de préférence à l'intérieur de la voie (Tₐ) par rapport à la direction transversale (Y) et déplacement de ces doigts de direction de la position de libération (L_{F}) à la position de direction (L_{L}) de telle sorte qu'à un moment ou pendant une période de temps sélectionnable, les doigts de tri du groupe (G_{S}) et les doigts de direction du groupe (G_{L}) prennent simultanément respectivement la position de tri (S_{T}) et la position de direction (L_{L}).

12. Procédé selon l'une des revendications de procédé précédentes,
**caractérisé en ce que** la détermination de la voie (Tₐ) pour tous les mauvais produits (Pₐ) à sortir par triage, transportés sur la bande d'alimentation (K), est effectuée ou vérifiée par produit une fois ou répétée de manière cyclique ou en permanence.
